# EUROPÄISCHE PATENTSCHRIFT

(11) **EP 0 661 003 B1**
(45) Veröffentlichungstag und Bekanntmachung des Hinweises auf die Patenterteilung: **08.03.2000**
(21) Anmeldenummer: 94118750.2
(22) Anmeldetag: 29.11.1994
(51) Int. Cl.: A23G 7/02, A23G 7/00

(54) **Kühlanlage zum kontinuierlichen Behandeln von Erzeugnissen in Giessblechen, wie Schokoladenmasse oder ähnliche Erzeugnisse**
Continuous cooling device for articles in castform such as chocolatemass and the same
Installation de refroidissement en continu d'articles en moule de coulée tel que chocolat ou analogue

(30) Priorität: 03.12.1993 IT MI932549
(43) Veröffentlichungstag der Anmeldung: 05.07.1995
(73) Patentinhaber: CARLE & MONTANARI S.p.A., 20141 Milano (IT)
(72) Erfinder: Cerboni, Renzo, I-20146 Milano (IT)
(74) Vertreter: Mayer, Hans Benno, Dipl.-Ing.

(56) Entgegenhaltungen:
- DE-A- 3 618 904
- DE-C- 631 142
- DE-C- 705 070
- FR-A- 838 433
- FR-A- 1 347 833
- NL-A- 300 990

## Beschreibung

Die vorstehende Erfindung betrifft eine Kuehlanlage, der Giessbleche zum Behandeln der in den Formhohlraeumen enthaltenden Masse, wie z.B. Schokolade oder aehnliche Erzeugnisse, kontinuierlich zufuehrbar sind.

Es ist aus dem Stand der Technik bekannt, dass zum Beispiel fuer die Herstellung von Schokoladetafeln oder Pralinen Giessbleche zum Einsatz gelangen, die eine Vielzahl von Formhohlraeumen aufweisen, die mit fluessiger Schokoladenmasse gefuellt werden und zur Durchfuehrung eines Haertevorganges eine Kuehlanlage durchlaufen.

Zu diesem Zweck sind Eintafelanlagen bekannt geworden, die parallel angeordnete Foerderketten fuer den Transport der Giessbleche aufweisen. Die Giessbleche werden in einer Dosiervorrichtung mit der zu kuehlenden Schokoladenmasse gefuellt.

Im Anschluss an die Dosiervorrichtung foerdern die parallelen Ketten nach Art eines "Paternosters" die Giessbleche durch eine Kuehlanlage und am Auslauf der Kuehlanlage werden die Giessbleche, die das ausgehaertete Schokoladenerzeugnis enthalten, z.B. an eine Wendeeinrichtung weitergefoerdert, in der ein Ausschlagen des fertigen Erzeugnisses aus den Formhohlraeumen erfolgt.

In bekannten Kuehlanlagen dieser Art sind zwei parallel zueinander angeordnete Kettenfoerderer vorgesehen, die mit Fuehrungen zusammenarbeiten, die geeignet sind, die Giessbleche nach dem Einlauf in die Kuehlanlage aufzunehmen.

Im Inneren der Kuehlanlage fuehren die parallelen Kettenstraenge am Anfang der Anlage eine steigende Bewegung durch, um in der Naehe der Decke der Kuehlanlage umgelenkt zu werden, um eine horizontal angeordnete Foerderstrecke zu durchlaufen. Am Ende der horizontal angeordneten Foerderstrecke werden die Kettenstraenge erneut umgelenkt, um im Anschluss daran eine nach unten gerichtete Bewegung durchzufuehren und die Giessbleche an weitere Foedermittel abzugeben.

Durch das Bewegen der Giessbleche, die das im Inneren der Kuehlanlage zu behandelnde Erzeugnis aufnehmen, treten bei Zuhilfenahme von parallel angeordneten Foerderketten, die nach Art eines "Paternosters" angetrieben werden, um eine steigende Bewegung, eine in einer horizontalen Ebene erfolgenden Bewegung, sowie eine nach unten gerichteten sinkenden Bewegung durchzufuehren, verschiedene Nachteile auf.

Es ist bekannt, dass die Verweilzeit eines bestimmten Erzeugnisses im Inneren einer Kuehlanlage bei der Planung der Anlage, die fuer ein bestimmtes Erzeugnis und eine bestimmte Erzeugnismenge ausgelegt wird, besonders wichtig ist.

Die Erfahrung hat gelehrt, dass nicht alle Erzeugnisse die gleiche Verweilzeit in einer Kuehlanlage benoetigen, d.h. die zu behandelnden Erzeugnisse sind einem differenzierten Kuehlvorgang, vom waermetechnischen Gesichtspunkt aus betrachtet, zu unterziehen.

Diese Beduerfnisse koennen nur sehr schwer oder ueberhaupt nicht in jenen Kuehlanlagen beruecksichtigt werden, die nach Art eines "Paternosters" arbeiten. Bei solchen Anlagen ist es schwierig, ideale, thermische Verhaeltnisse aufrechtzuerhalten, d.h. Kaeltewerte, die einer ganz bestimmten Merkmalskurve fuer den Abkuehlvorgang von Schokolade folgen.

Die Schwierigkeit, bestimmte Klimaverhaeltnisse einzustellen, treten besonders stark dann auf, wenn die Anlage nicht mit maximaler Fertigungskapazitaet, entsprechend der Anfangsplanung der Anlage betrieben werden kann. Die maximale Fertigungskapazitaet kann aber oft nicht vollstaendig genuetzt werden, wenn Erzeugnisse behandelt werden sollen, die unterschiedlich von denen sind, fuer welche die Eintafelanlage urspruenglich geplant wurde.

Daraus ergibt sich der Nachteil, dass alle bisher im Einsatz befindlichen Kuehlanlagen sehr geringe Anpassungsfaehigkeit der technologischen Parameter aufweisen. Ferner stellen die Foerdermittel, wie Ketten, Fuehrungen, Uebertragungswellen, Bleche und Raumteiler, ein Hinderniss fuer eine ideale Luftfuehrung durch die aus zu kuehlenden Giessblechen bestehenden Stapel dar. Ferner wird eine erhebliche Menge der thermischen Energie (Kaelteeinheiten) von diesen Bauteilen aufgenommen und deshalb besonders von den metallischen Bauteilen, wie z.B. Ketten, Fuehrungen, Antriebswellen oder Umlenkeinrichtungen, die im Inneren der Kuehlanlage angeordnet sind und staendig von einem Kaltluftstrom ueberstroemt werden, abgeleitet.

Verwendet man parallel angeordnete Kettenstraengen als Transporteinrichtung fuer die Giessbleche, die die Kuehlanlage durchlaufen, so tritt der Nachteil ein, dass der gegenseitige Abstand (Teilung) zwischen den Fuehrungsbahnen und den Hubeinrichtungen fuer die Giessformen einen festen Wert einnehmen muss. Aus diesem Grunde, da waehrend der Planung der Anlage dieser Abstand oder diese Teilung zwischen einer Giessform und der anderen genau festgelegt wurde, ist keine Moeglichkeit gegeben, Giessbleche mit unterschiedlichen Abmessungen, z.B. Giessbleche mit einer groesseren Dicke zum Eintafeln von groesseren Schokoladenartikeln einzusetzen. Ferner ist es in den mit einem "Paternoster" ausgeruesteten Kuehlanlagen erforderlich, dass die Giessbleche entlang genau festgeleten Bahnen gefoerdert werden muessen, d.h. die Giessbleche fuehren zuerst eine steigende Bewegung mit einer bestimmten Laenge durch, um im Anschluss, entlang einer horizontal angeordneten Bewegungsbahn, verfahren zu werden, um anschliessend erneut, entlang einer vertikal angeordneten Fuehrungsbahn, nach unten gefoerdert zu werden. Es ist einleuchtend, dass diese Notwendigkeit die Ausbildungmoeglichkeiten der gesamten Eintafelanlage einschraenkt.

Ein weiterer Nachteil, der fuer die mit einem "Paternoster" ausgeruesteten Foerdersystem auftritt, ist in dem grossen baulichen Aufwand der Foerdermittel und Antriebseinrichtungen zu sehen.

Um eine intermittierende Bewegung der Ketten, die eine steigende und eine sinkende Bewegung im Raum der Kuehlanlage durchfuehren muessen, einleiten zu koennen, ist es unumgaenglich, Einrichtungen mit Steuerkurven, Getriebe besonderer Bauart, Gehaeuse, Antriebswellen sowie kostenaufwendige Foerderketten vorzusehen. Ferner ist es notwendig, dass die in einer vertikalen Ebene erfolgende Bewegung der Giessformen, einwandfrei mit allen Einrichtungen, die fuer die Bewegung in einer horizontalen Ebene der Giessformen vorgesehen sind, synchronisiert werden; diese Synchronisiereinrichtungen sind aber haeufig Anlass zu Betriebsstoerungen.

Es ist noch darauf hinzuweisen, dass die lebensmittelhygienischen Bedingungen im Inneren der bekannten Kuehlanlagen sehr zu wuenschen uebrig lassen. Die fuer den Kuehlvorgang der Schokolade verwendete Luftstroemung bestreicht neben dem Erzeugnis in den Giessblechen auch die Foerderketten, die dazugehoerenden Fuehrungen, sowie die Umlenkeinrichtungen der Ketten. Dies fuehrt zu einer unvermeidbaren Verseuchung des Erzeugnisses, besonders aufgrund eines Abloesens von Schmiermittel von den Ketten und Umlenkraedern, sowie von Schmutzteilen, die sich auf den Ketten oder den Fuehrungen fuer diese Ketten ablegen. Folglich tritt eine bemerkenswerte Verminderung der Qualitaet des Erzeugnisses ein, nachdem dieses die Kuehlanlage durchlaufen hat.

Der bauliche Aufwand der Transporteinrichtungen nach Art eines "Paternosters", der eine Vielzahl mechanischer Baugruppen bedingt, die im Inneren der Kuehlanlage zu montieren sind, schliesst auch einen einfachen und in Abstaenden durchzufuehrenden Reinigungsvorgang der sich drehenden Bauteile aus und bedingt einen grossen Zeitaufwand fuer die staendige Reinigung der Auflagefuehrungen, die die Formbleche aufnehmen und laengs derer haeufig Schokoladenreste abgelagert werden.

Ein weiterer Nachteil, der die bekannten Transporteinrichtungen kennzeichnet, ist darin zu sehen, dass waehrend der Vorschubbewegung durch die Kuehlanlage der gegenseitige Abstand (Teilung) zwischen den einzelnen Giessblechen aufgehoben wird, d.h. der genaue Abstand zwischen einer Form und der anschliessenden geht verloren.

Mit der genannten genauen Teilung sind die Giessbleche mit einer die Foerdereinrichtung dem Kuehlschrankeinlauf zuzufuehren. Diese Tatsache bedingt es, dass sehr aufwendige Synchronisiereinrichtungen, die einen erheblichen baulichen Aufwand darstellen, am Auslauf der Kuehlanlage vorzusehen sind, um die Giessbleche erneut mit dem gewuenschten Abstand (Teilung) auf die Transporteinrichtung (Abtransport) ablegen zu koennen.

Es ist vom Stand der Technik her bekannt geworden eine Kuehlanlage vorzusehen, die mit wenigstens drei einzelnen Aufnahmemagazinen ausgeruestet ist, die geeignet sind, die Giessbleche mit dem zu kuehlenden Erzeugnis aufzunehmen. Von diesen Magazinen ist die mittige Einrichtung in einer vertikalen Ebene bewegbar. Dies ermoeglicht ein allmaehliches Verschieben der Giessformen entlang einer meanderfoermigen Bahn, und zwar zwischen den Ebenen der seitlich vorgesehenen Magazine. Dadurch wird ein Foerdern der Giessformen von unten nach oben und von oben nach unten in der Kuehlanlage moeglich.

Fuer diese bekannte Loesung ist der bauliche Aufwand sowie der Platzbedarf erheblich und die Notwendigkeit, die Giessbleche entlang einer meanderfoermigen Bahn waehrend des Aushaertevorganges verschieben zu muessen, kann zu einer Wellenbildung an der Oberflaeche des Schokoladenerzeugnisses und zu keilfoermigen Endprodukten fuehren.

Ferner wird es notwendig, dass die Giessformen stets in der gleichen Richtung in die Kuehlanlage einlaufen und aus dieser auslaufen. Dies fuehrt zu einer Einschraenkung in der moeglichen Lageanordnung der Eintafelanlage. Die fuer die Kuehlanlage erforderlichen Bauvolumen sind sehr gross, da zwischen den seitlich angordneten, feststehenden Magazinen ein Zwischenmagazin fuer die zeitweise Einlagerung der Giessbleche notwendig ist; schliesslich ist es in den bekannten Kuehlanlagen nicht moeglich, Abteilungen mit unterschiedlicher Temperatur des Kuehlluftstromes zu schaffen, wie dies fuer einen modernen Kuehlvorgang fuer ein hochqualitatives Schokoladenerzeugnis notwendig waere.

Aus der NL-A-300990 ist eine Anlage zum Behandeln von Backwaren bekannt geworden, bei der die zu behandelnden Erzeugnisse in kastenartige Behaelter eingebracht werden. Unter Vorsehung einer Hubvorrichtung werden die saeulenartig uebereinander angeordneten Behaelter nach oben verschoben.

Der jeweils oberste Behaelter wird waagerecht auf einen zweiten Stapel verfahren, der ueber eine Absenkeinrichtung die Behaelter nach unten verfaehrt, um ein Entladen der Backwaren aus dem jeweils untersten Behaelters zu ermoeglichen.

Waehrend der nach oben bzw. nach unten gerichteten Foerderbewegung werden die in den Aufnahmebehaeltern abgelegten Erzeugnisse, z.B. einem Kuehlvorgang ausgesetzt. Der in NL-A-300990 beschriebenen Anlage haftet der Nachteil an, dass diese bekannte Anlage weder kontinuierlich noch direkt beschickt werden kann.

Bei der bekannten Anlage sind besondere Aufnahmebehaelter vorgesehen, in die das zu kuehlende Erzeugnis einzubringen und nach der Behandlung zu entnehmen ist.

Die Vorsehung von besonderen Aufnahmebehaeltern fuehrt zu einer Erschwerung der Reinigungsarbeiten der gesamten Kuehlanlage, was die lebensmittelhygienischen Bedingungen stark beeintraechtigt.

Des weiteren fuehrt die Notwendigkeit, gesonderte und teilweise geschlossene Aufnahmebehaelter in der Anlage zu verwenden, zu einer Verminderung des Wirkungsgrades eines eingeleiteten Kuehlluftstromes.

Aufgrund einer vorgegebenen Anzahl von aufwaerts bzw. abwaerts gefoerderten Aufnahmebehaeltern zur Aufnahme der zu kuehlenden Erzeugnisse ist es ferner bei der bekannten Anlage nicht moeglich, die Stapelhoehe der Aufnahmebehaelter zu beieinflussen.

Aus diesem Grunde ist es auch nicht moeglich, die Verweilzeit der Erzeugnisse im Inneren der Anlage zu beeinflussen.

Desweiteren hat die bekannte Anlage den Nachteil, dass Schwankungen im Foerdertakt der Giessbleche, der in modernen Eintafelanlagen fuer die Schokoladenindustrie zwischen 25 und 50 Giessblechen pro Minuten schwanken kann, nicht ausgeglichen werden koennen.

Schliesslich weist die bekannte Anlage den Nachteil auf, dass sie nicht in eine geradlinige Fertigungsstrasse eingegliedert werden kann, da bei der bekannten Anlage der Produktauslauf seitlich versetzt zu dem Produkteinlauf vorgesehen ist.

Es ist daher Aufgabe der vorstehenden Erfindung, die Nachteile des Standes der Technik zu vermeiden und eine Kuehlanlage der genannten Art vorzuschlagen, die ohne Antriebsketten arbeitet, wobei die Zufuehrung von Giessblechen mit unterschiedlicher Dicke und Flaechenabmessung moeglich ist, und eine wesentliche Vereinfachung des Aufbaues im Inneren der Kuehlanlage moeglich wird, dass gleichzeitig die Moeglichkeit geschaffen wird, die periodisch durchzufuehrenden Reinigungsarbeiten der Kuehlanlage zu vereinfachen, gleichzeitig mit einer Verbesserung der lebensmittelhygienischen Bedingungen im Inneren der Einrichtung, und dass gleichzeitig eine Verbesserung des thermischen Wirkungsgrades der Kuehlanlage erreicht wird und die Moeglichkeit eroeffnet wird, die klimatischen Bedingungen an das zu behandelnde Erzeugnis anzupassen und zudem die Verweilzeit des Erzeugnisses im Inneren der Kuehlanlage zu aendern.

Diese Aufgabe wird nach der Erfindung durch eine kontinuierlich arbeitende Kuehlanlage zum Behandeln von in Giessblechen eingetafelten Massen, z.B. Schokoladenmasse oder aehnlichen Erzeugnissen, mit einer Hub- und Stapelvorrichtung fuer die zugefuehrten Giessbleche und einer Absenk- und Entstapelvorrichtung fuer die abzufoerdernden Giessbleche dadurch geloest, dass die Kuehlanlage eine Einlaufoeffnung aufweist, der eine Auslaufoeffnung gegenueberliegt, dass der Raum der Kuehlanlage von einer horizontal angeordneten Antriebswelle mit einer Foerderschnecke zum Transport der Giessbleche durchdrungen wird und der Hub- und Stapelvorrichtung, sowie der Absenk- und Entstapelvorrichtung Halteeinrichtungen fuer die Giessbleche zugeordnet sind, wobei ueber den gebildeten Giessblechstapeln im Innenraum der Kuehlanlage eine in ihrer Hoehenlage einstellbare Vorrichtung zum Verschieben der Giessbleche von der Oeberseite des steigenden Stapels zur Oberseite des absinkenden Stapels angeordnet ist.

Mit besonderem Vorteil ist die Einrichtung zum Zufuehren sowie zum Abfuehren der Giessbleche von einer Transportschnecke gebildet, die mit von der Unterseite des Giessbleches abstehenden Vorspruengen in Wirkverbindung steht, wobei sich die Transportschnecke durch den Raum der Kuehlanlage erstreckt.

Dank der Vorsehung einer steuerbaren Hubvorrichtung fuer die Giessbleche, besteht die Moeglichkeit, diese gesteuert um einen kleinen Betrag im Inneren der Kuehlanlage anzuheben. Dadurch wird die Verbindung zur Transportschnecke geloest und die Giessbleche koennen an eine Haltevorrichtung abgegeben werden, um die Moeglichkeit zu schaffen, einen Stapel aus einer Vielzahl von uebereinandergestapelten Giessblechen zu schaffen.

Werden von der Unterseite der Kuehlanlage weitere Giessbleche zugefuehrt, so erfolgt ein Anheben der Giessbleche im Stapel wodurch der Stapel zur Oberseite der Kuehlanlage hin waechst, dies solange, bis die Ebene der Foerdereinrichtung erreicht ist. Die Foerdereinrichtung ist in vorteilhafter Weise in einer beliebigen Hoehenlage der Kuehlanlage positionierbar.

Mit der in einer Horizontalebene verfahrbaren Foerdereinrichtung werden stets die oberen Giessbleche der aus steigenden Giessblechen gebildeten Saeule erfasst und diese Giessbleche werden zur Oberseite der Saeule verfahren, die aus absinkenden Giessblechen gebildet ist.

Durch Vorsehen einer Einrichtung zum Halten der gesamten, aus gestapelten Giessblechen, bestehenden Saeule besteht die Moeglichkeit, stets das unterste Giessblech an eine Absenkvorrichtung abzugeben, um erneut ein formschluessiges Verbinden zwischen diesem abgesenkten Giessblech und der Foerderschnecke zu schaffen, und ein Ausfahren des Giessbleches aus der Giessanlage zu ermoeglichen.

Der Erfindungsgegenstand wird nun genauer anhand eines Ausfuehrungsbeispieles beschrieben und in den Zeichnungen dargestellt. Es zeigen:
Figur 1 in einer Vorderansicht die Kuehlanlage nach der Erfindung, mit abgenommener Wand des Kuehlschrankgestells;
Figur 2 in einer Draufsicht die erfindungsgemaesse Kuehlanlage;
Figur 3 eine Vorderansicht der Schmalseite der Kuehlanlage mit einer abgenommenen Seitenwand;
Figur 4 ein Detail der Hubeinrichtung sowie der Halteeinrichtung in Ansicht nach Linie IV-IV der Figur 1;
Figur 5 die Absenkvorrichtung der Giessbleche in Ansicht nach Linie V-V der Figur 1;
Figur 6 in Ansicht ein Detail der Haltevorrichtung des Giessblechstapels;
Figur 7 in schematischer Ansicht ein Detail der Kuehlanlage in Draufsicht unter Darstellung der Anordnung vertikaler Fuehrungen fuer die Giessbleche;
Figur 8 schematisch in Ansicht Teil der Foerdereinrichtung zum Verschieben der Giessbleche in einer horizontalen Ebene;
Figur 9 in Ansicht die hakenfoermig ausgebildeten Halteeinrichtungen der Giessbleche zum Bewegen durch die horizontale Foerdereinrichtung.

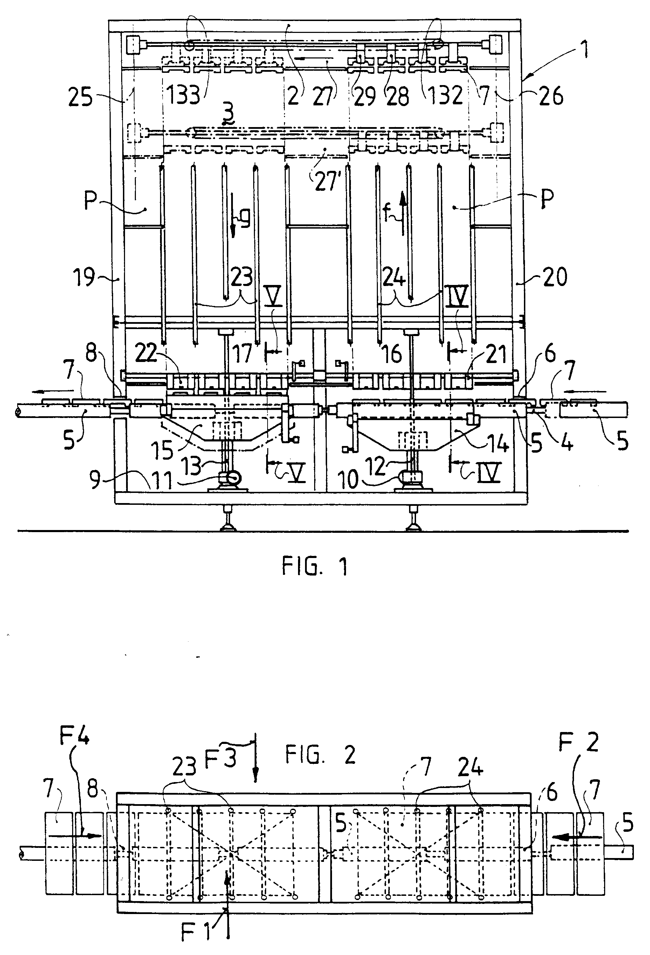

Wie der Figur 1 zu entnehmen ist, besteht die gesamthaft mit 1 gekennzeichnete Kuehlanlage aus einem Rahmengestell und aus Wandplatten, die es ermoeglichen, einen geschlossenen Raum 3 zu bilden.

An der Unterseite wird der Raum 3 der Kuehlanlage 1 von einer vorzugsweise horizontal angeordneten Antriebswelle 4 durchdrungen. Die Welle nimmt Foerderschnecken 5 auf, die ueber die Welle 4 in Drehbewegung versetzt werden. Somit besteht die Moeglichkeit, Giessbleche 7 im gewuenschten Abstand und mit der gewuenschten Geschwindigkeit durch die Einlaufoeffnung 6 zuzufuehren. Die Giessbleche 7 sind mit dem thermisch zu behandelnden Erzeugnis gefuellt.

Stets unter Verwendung der Schraube 5, die den Raum der Kuehlanlage 1 durchdringt, werden die Formen 7 aus dem Raum 3 ueber eine Auslaufoeffnung 8 abgefoerdert.

In der Naehe des Unterbodens 9 der Kuehlanlage 1 sind Hubeinrichtungen 10 und Absenkeinrichtungen 11 vorgesehen, die in vorteilhafter Weise aus elektromechanischen Hubvorrichtungen bestehen, die Antriebskolben 12, 13 aufweisen. Jeder Kolben 12, 13 nimmt eine Plattform 14, 15 auf, die in vorteilhafter Weise aus Blech besteht, und U-foermigen Querschnitt aufweist.

Zwischen den nach oben gerichteten Armen der U-foermig ausgebildeten Plattform 14, 15 ist die Welle 4 angeordnet, die am Gestell 2 gelagert ist und die Transportschnecken 5 aufnimmt, mit denen die Giessbleche 7 in Wirkverbindung treten.

Es hat sich als vorteilhaft erwiesen, die Plattformen 14 und 15 auf beiden Seiten unter Zuhilfenahme von vertikal angeordneten Saeulen 16 und 17 zu fuehren. Die oberen Enden der Saeulen 16 und 17 sind mit Querstreben 18 des Rahmengestells 2 verbunden.

Mit den senkrecht angeordneten Teilen 19 und 20 des Rahmengestells 2 der Kuehlanlage 1 sind Einrichtungen zum Halten der Formbleche verbunden. Diese Einrichtungen bestehen im wesentlichen aus Greifern 21 und 22, die gesteuert antreibbar sind. Diese Greifer 21, 22 sind in vorteilhafter Weise als Greiferarme ausgebildet, die von einer Oeffnungsstellung in eine geschlossene Stellung verschenkbar sind. In der geschlossene Stellung der Greifer 21, 22 kann ein ganzer aus uebereinander geschichteten Giessblechen 7 bestehender Stapel P in seiner Lage gehalten werden.

Die Vorrichtung 21 ist derartig ausgebildet, dass eine staendige Beschickung mit Giessblechen 7 von unten ueber die Plattform 14 erfolgen kann. Die Vorrichtung 22 ist derartig ausgebildet, dass stets das unterste Giessblech 7, das auf der Plattform 15 aufliegt, abgegeben werden kann.

Waehrend in der Zeichnung nach Figur 1 die Giessbleche von recht nach links zugefuehrt werden, und ueber die Oeffnung 6 in die Kuehlanlage eintreten und diese ueber die Oeffnung 8 verlassen, ist es naheliegend, dass die Zufuehrrichtung der Giessbleche 7 auch umgekehrt vorgesehen sein kann, d.h. die Giessbleche 7 koennen auch von der linken Seite der Kuehlanlage 1 zugefuehrt werden, um den Raum der Kuehlanlage 1 ueber die Oeffnung 6 zu verlassen. In diesem Fall wird durch den Giessblechstapel eine nach oben gerichtete Hubbewegung (g) durchgefuehrt, waehrend der Stapel eine nach unten gerichtete, absinkende Bewegung (f) durchfuehrt.

Die senkrechten Wandteile des Rahmengestelles 2 der Kuehlanlage 1 nehmen vertikal angeordnete Fuehrungsstangen 23 und 24 auf, welche die Aufgabe haben, die Giessbleche 7 sicher waehrend der Hub- oder Absenkbewegung zu fuehren.

Gleichzeitig dienen die Stangen 23, 24 auch dazu die Giessbleche 7 auf konstantem, gegenseitigem Abstand zu halten, d.h. die Teilung, mit der die Giessbleche 7 unter Zuhilfenahme der Transportschnecke 5 zugefuehrt werden, bleibt erhalten.

Wie der Figur 2 zu entnehmen ist, wird aufgrund des besonderen Aufbaus der Kuehlanlage 1 sowie der Anordnung in Form von Saeulen oder Stapeln (P) der Giessbleche 7 die Moeglichkeit geschaffen, das in den Giessblechen 7 enthaltene Erzeugnis mit einem Kuehlluftstrom von allen Seiten des Kuehlraumes 3 zu beeinflussen, wie dies schematisch in Figur 2 mit den Pfeilen F1, F2, F3 und F4 dargestellt ist.

Durch diese Massnahme wird ein Klimatisier- und Kuehlvorgang des Erzeugnisses in optimaler Weise erreicht.

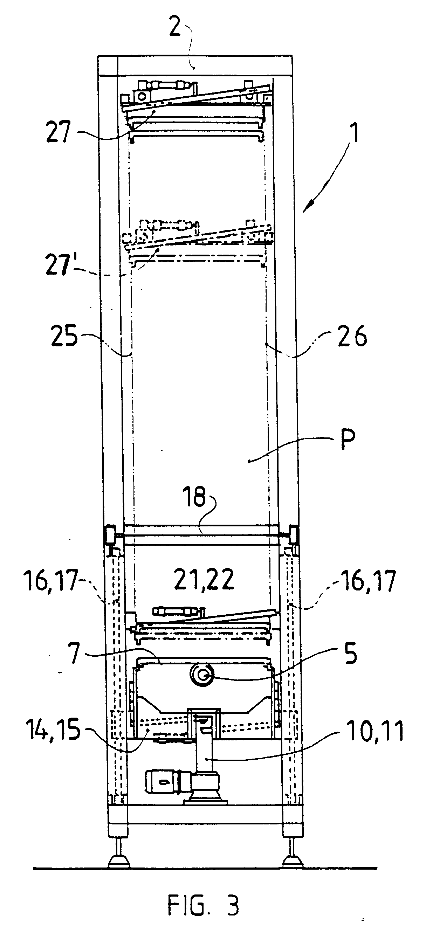

Der Figur 3 kann das Gestell 2 der Kuehlanlage 1 in Seitenansicht und mit einer, aus Gruenden der Uebersichtlichkeit, abgenommenen Wand entnommen werden.

Deutlich kann die Anordnung der Transportschnecke 5 zum Foerdern der Giessbleche 7 entnommen werden. Eine Anzahl von Giessblechen 7 wird ueber der U-foermig ausgebildeten Plattform 14 angeordnet.

Mit der Plattform 14, 15 koennen die Formbleche entlang einer vertikalen Achse unter Zuhilfenahme einer Hub- und Absenkvorrichtung 10, 11, die an der Unterseite des Gestells 2 der Kuehlanlage 1 angeordnet ist, verschoben werden. Die Seiten der Plattformen 14, 15 sind verschiebbar mit vertikal angeordneten Fuehrungssaeulen 16, 17 verbunden. Diese Fuehrungsseulen sind unter Zuhilfenahme von Querstreben 18 mit dem Rahmengestell 2 der Kuehlanlage 1 verbunden. Ueber der Plattform 14, 15 ist in fest gegenueber dem Rahmengestell 2 der Kuehlanlage 1 angeordneter Lage eine steuerbare Vorrichtung zum Halten des aus Giessblechen 7 bestehenden Stapels P angeordnet.

Die Haltevorrichtung ist gesamthaft mit den Bezugszeichen 21, 22 gekennzeichnet.

Vertikale Fuehrungen, z.B. Gewindespindeln 25, 26 nehmen in positionierbarer Weise eine Verschiebevorrichtung 27 auf, die von einer Stellung, die mit durchgehenden Linien gekennzeichnet ist, in eine Lage, die mit gestrichelten Linien 27' dargestellt ist, verschoben werden.

Die in einer horizontalen Ebene arbeitende Verschiebevorrichtung 27 nimmt einen Wagen 28 auf, der mit steuerbar antreibbaren Greifern 29 ausgeruestet ist, die ein Giessblech 7 des entsprechenden Stapels P aufnehmen kann, um das Giessblech 7 von dem sich nach oben bewegenden Stapel (Pfeil f) an die Oberseite des nach unten absinkenden Stapels P (Pfeil g) zu transportieren.

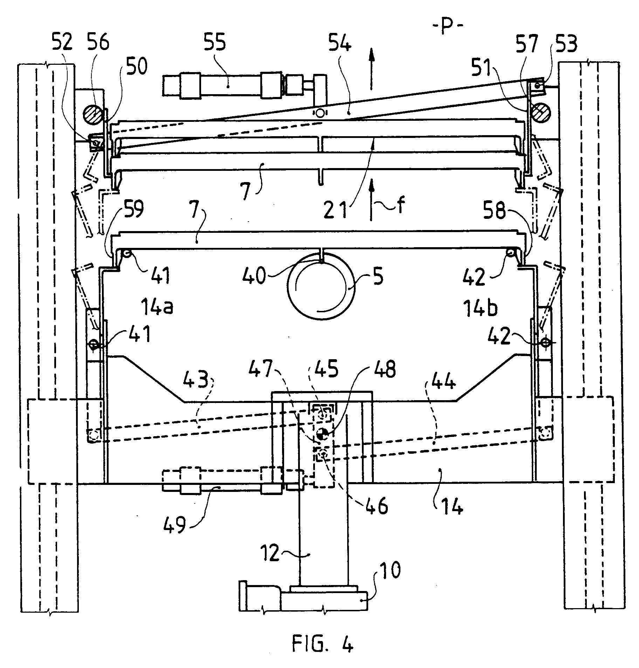

Der Figur 4 kann im Detail die steuerbare Hubvorrichtung entnommen werden. Diese besteht aus einer elektromechanischen Vorrichtung 10 mit einem Kolben 12, der auf die Plattform 14, die im wesentllichen U-foermige Form aufweist, einwirkt.

In der Mitte der Plattform 14 (hebbar und senkbar) ist die Transportschnecke 5 angeordnet mit der ein vom Giessblech 7 abstehendes Bauteil 40 in Verbindung tritt. Die Giessbleche 7 werden entlang paralleler Fuehrungen 41, 42 bewegt.

Die vertikal angordneten Arme 14a und 14 b der Plattform 14 sind in vorteilhafter Weise als Winkelhebel ausgebildet.

Somit kann eine Auflageflaeche fuer die Giessbleche 7 gebildet werden. Die Hebel 14a, 14b sind schwenkbar von Zapfen 41 und 42 aufgenommen. Das untere Ende der Hebel 14a und 14b ist mit Hebegestaengen 43 und 44 verbunden, die in den Punkten 45 und 46 an einer Steuerplatte 47 angelenkt sind, die um einen Zapfen 48 verschwenkbar gelagert ist.

Das freie Ende der Platte 47a ist mit einer Kolben-Zylindereinheit 49 verbunden, ueber die die Einrichtung angetrieben werden kann. Dadurch wird es moeglich, die Arme 14a und 14b von der mit durchgehenden Linien dargestellten Stellung nach aussen in die mit gestrichelten Linien dargestellte Lage zu verschwenken und das Giessblech 7 in einer bestimmten Lage zu halten, oder in der anderen Stellung der Arme das Giessblech 7 freizugeben.

Ueber der Plattform 14, 15 ist die Haltevorrichtung 21 vorgesehen, die mit den Giessblechen 7, die in Richtung des Pfeiles (f) zugefuehrt werden, einen Stapel P bildet, bestehend aus uebereinander angeordneten Giessblechen 7.

Die Vorrichtung 21 weist Arme 50 und 51 auf, diese Arme 50, 51 haben L-Form und koennen um Zapfen 56, 57 verschwenkt werden, die an den Punkten 52, 53 mit dem Ende einer geneigten Antriebsstange 54 verbunden sind. Die Antriebsstange ist ueber eine steuerbare Antriebsvorrichtung betaetigbar, z.B. ueber eine Kolben-Zylindereinheit 55. Die Schwenkzapfen 52 und 53 sowie die Einrichtungen fuer die genaue Lageanordnung der Arme 50, 51 und der Gestaenge 54 ist derartig gewaehlt, dass mit Antrieb der Kolben-Zylindereinheit 55 die Arme 50, 51 entweder eine Oeffnungsbewegung oder eine Schliessbewegung, wie dies mit durchgehenden Linien und gestrichelten Linien in Figur 4 dargestellt ist, durchfuehren.

Um ein sicheres Verbinden zwischen den gegenueberliegenden Enden der Giessbleche 7 und den L-foermig ausgebildeten Armen 50, 51 zu ermoeglichen, weisen die Giessbleche 7 an gegenueberliegenden Enden stufenfoermige Ausnehmungen 58, 59 auf, die eine formschluessige Verbindung zwischen Giessblech 7 und den Armen 50, 51 ermoeglicht.

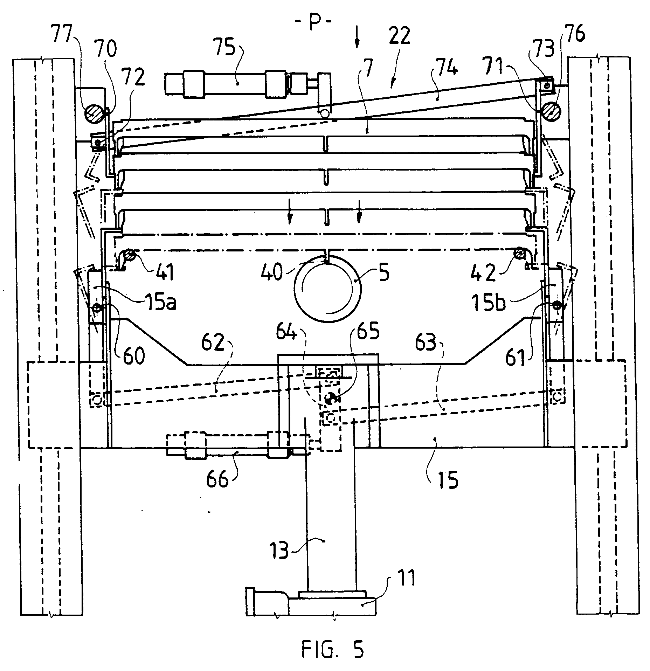

In Figur 5 ist schematisch die Vorrichtung zum Halten und zum Abgeben der Giessbleche an die darunterliegende Plattform 15 dargestellt.

Die Plattform 15 weist eine elektromechanische Hubvorrichtung 11 auf, deren Kolben 13 mit der U-foermig ausgebildeten Plattform 15 wirkverbunden ist. Die Plattform 15 weist seitliche Arme 15a und 15b auf, die gesteuert um Zapfen 60 und 61 verschwenkbar sind. Die unteren Enden der Armen 15a, 15b sind mit einem Gestaenge 62, bzw. 63 und die Enden der Hebel 62, 63 gelenkig mit einer Platte 64 wirkverbunden, um eine Schwenkbewegung um einen zentralen Zapfen 65 durchfuehren zu koennen.

Die Platte 64 ist an ihrer Unterseite mit einer Kolben-Zylindereinheit 66 verbunden, die es ermoeglicht, gesteuert auf die Gestaenge 62, 63 einzuwirken, um die Arme 15a und 15b zu verschwenken.

Somit wird es moeglich, den Armen eine Oeffnungsbewegung oder eine Schliessbewegung, wie dies mit Strichpunktlinie in Figur 5 dargestellt ist, zu verleihen.

Die Vorrichtung 22, die zum Absenken der Giessbleche ueber der Plattform 15 vorgesehen ist, weist Arme 70 und 71 auf, die L-foermig ausgebildet sind und gesteuert um Zapfen 76, 77 verschwenkbar sind.

In geschlossener Stellung halten die Arme 70 und 71 die unteren Giessbleche 7 des aus uebereinander angeordneten Giessblechen 7 bestehenden Stapels P. Die Giessbleche 7 werden freigegeben, wenn die Arme 70 und 71 geoeffnet werden.

Stets in der Mitte der Plattform 15 ist eine Schnecke 5 zum Foerdern der Giessbleche 7 vorgesehen.

In vorteilhafter Weise sind die Arme 70, 71 gelenkig in den Punkten 72, 73 mit einem geneigten Antriebsgestaenge 74 wirkverbunden. Das Antriebsgestaenge ist mit einer Kolben-Zylindereinheit wirkverbunden, wogegen die Enden des Gestaenges 74 mit den Armen 71 und 72 in der dargestellten Weise verbunden sind.

Durch Antrieb der Kolben-Zylindereinheit 75 ist es ermoeglich, die L-foermig ausgebildeten Enden der Arme 70, 71 der Abgabevorrichtung 22 gesteuert zu verschwenken, um stets das unterste Giessblech 7 freizugeben, sobald sich die Plattform 15 mit ihren Armen 15a, 15b in unmittelbarer Naehe des untersten Giessbleches 7 befindet.

Waehrend der Absenkbewegung des Kolbens 13 der Einrichtung 11 wird das Giessblech 7 nach unten gefoerdert und auf den parallel angeordneten Fuehrungen 41, 42 abgelegt. Ferner tritt der von jedem Giessblech 7 abstehende Vorsprung 40 dann formschluessig mit den Gaengen der sich drehenden Transportschnecke 5 in Wirkverbindung, und es wird moeglich, die Giessbleche 7 abzufoerdern.

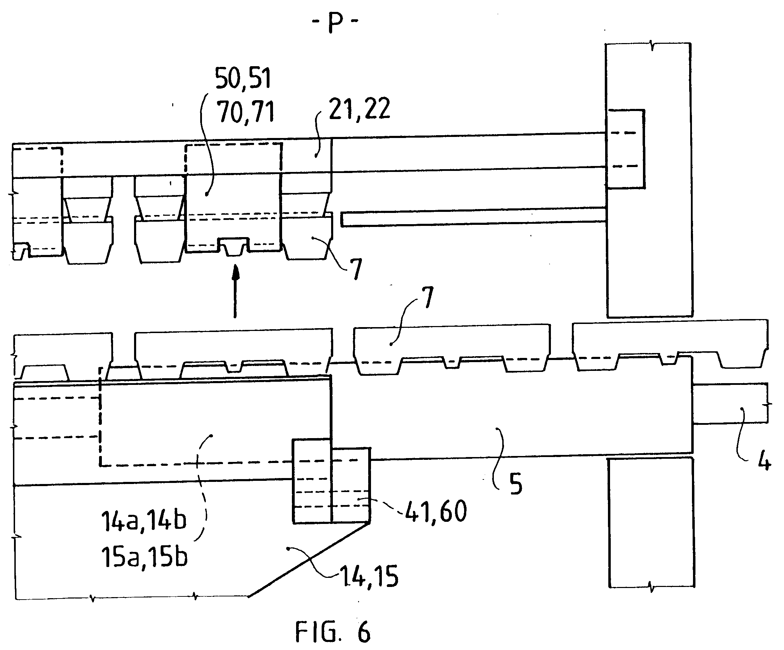

Im Detail nach Figur 6 ist die Antriebswelle 4 zum Antrieb der Transportschnecke 5 zum Foerdern der Giessbleche 7 dargestellt. Ferner ist ein Teil der Plattform 14, 15 gezeigt.

Jede Plattform 14, 15 nimmt verschwenkbar, z.B. um die Zapfen 41, 16, die Arme 14a, 14b oder 15a, 15 auf.

Der Figur 6 kann entnommen werden, dass ueber der Plattform 14, 15 eine entsprechende Haltevorrichtung 21, 22 vorgesehen ist, die dazu dient, die aus gestapelten Giessblechen 7 gebildete Saeule P in ihrer Lage zu halten.

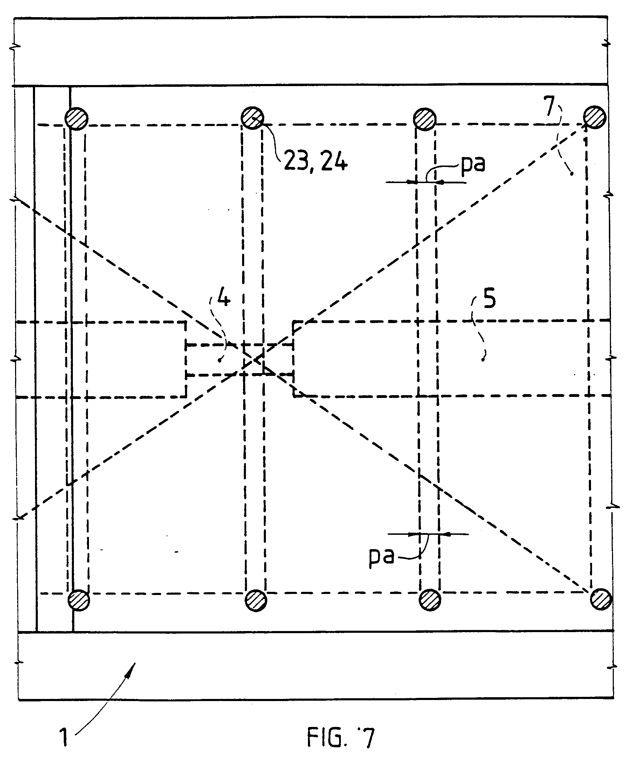

Die Figur 7 zeigt in einer Draufsicht Teile der Kuehlanlage 1, der von der Welle 4 zur Aufnahme der Transportschnecke 5 zum Bewegen der Giessbleche 7 durchdrungen wird. Um zu gewaehrleisten, dass die Giessbleche 7 waehrend ihrer Bewegung in einer vertikalen Ebene gleichmaessig auf genauem, gegenseitigem Abstand gehalten werden, d.h. um zu gewaehrleisten, dass die Giessbleche waehrend ihrer Bewegung in der vertikalen Ebene, d.h. wenn die Giessbleche nicht mehr durch die Foerderschnecke 5 gefuehrt werden, einen gleichmaessigen gegenseitigen Abstand (Teilung (pa)) beibehalten, sind laengs der senkrecht angeordneten Waende des Rahmengestells der Kuehlanlage Saeulen oder Stangen 23, 24 angeordnet, die die Aufgabe, haben die Giessbleche 7 zu fuehren und auf genauem Abstand zu halten.

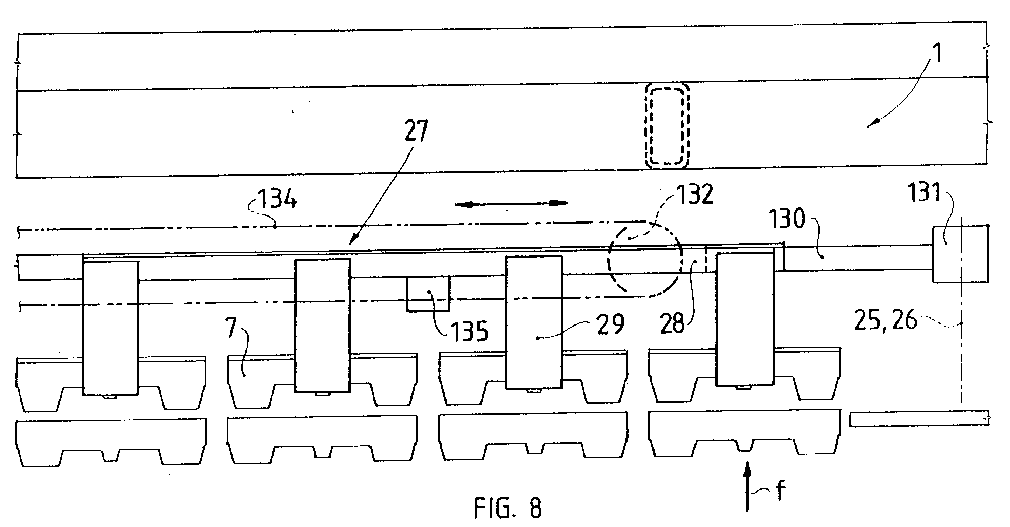

Der Figur 8 kann in Ansicht ein Detail der Verschiebeeinrichtung 27 entnommen werden.

Die Verschiebeeinrichtung 27 fuer die Giessbleche 7 besteht im wesentlichen aus einem Wagen 28, der mit steuerbaren Greifern 29 ausgeruestet ist, die mit den Giessblechen 7 der obersten Reihe eines Blechstapels P in Wirkverbindung gebracht werden koennen, bzw. diese Giessbleche freigeben.

Der Wagen 28 wird von parallelen Fuehrungen 130 aufgenommen, die unter Zuhilfenahme einer endseitig vorgesehenen Verdickung 131 mit senkrecht angeordneten Gewindespindeln 25, 26 wirkverbunden sind. Die Gewindespindeln sind steuerbar antreibbar, z.B. unter Verwendung eines steuerbaren Reduziergetriebes (nicht dargestellt). Somit wird es moeglich, die Verschiebeeinrichtung 27 auf einer gewuenschten Hoehenlage im Inneren der Kuehlanlage 1 anzuordnen, wodurch die Arbeitshoehe im Raum 3 der Kuehlanlage 1 festgelegt und begrenzt wird. Dies ermoeglicht ein Anpassen an genaue Kuehlparameter fuer die einzelnen Erzeugnisse.

Zwischen den parallelen Fuehrungen 130 ist unter Zuhilfenahme eines Umlenkrades 132, bzw. 133 ein Zahnriemen 134 angeordnet, der mit einem abstehenden Bauteil 135, das Bestandteil des Wagens 28 ist, befestigt ist.

Durch Verbinden einer der Umlenkraeder 132 oder 133 mit einem steuerbaren Antriebsgeraet wird es ermoeglicht, den Wagen 28 zusammen mit den Greifern 29 und den Giessblechen, die von den Greifern 29 erfasst werden, hin und her zu bewegen. Somit wird es ermoeglicht, stets die oberste Reihe der Giessbleche 7 der sich nach oben bewegenden Saeule (f) in Richtung der Oberseite der sich nach unten bewegenden Saeule (g) oder umgekehrt zu bewegen.

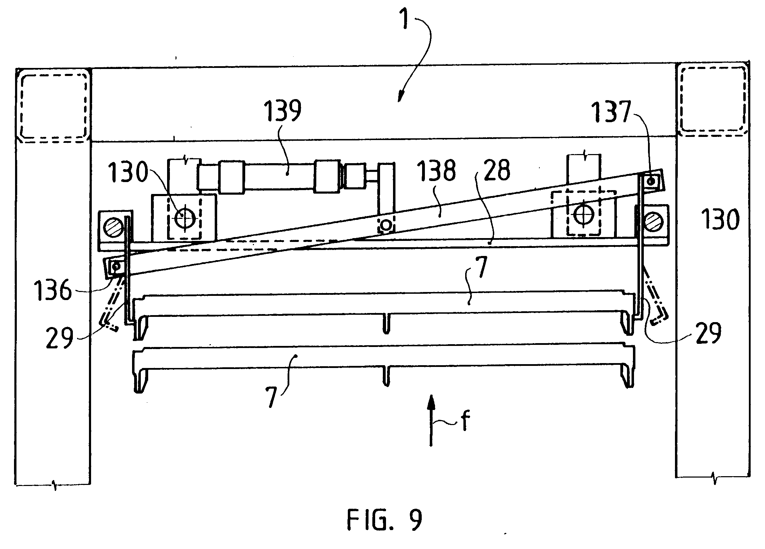

Die Arbeitsweise der Greifer 29 kann der Darstellung nach Figur 9 entnommen werden.

Bei Betrachten dieser Zeichnung kann festgestellt werden, dass der Aufbau der Kuehlanlage 1 parallele Fuehrungen 130 aufweist, entlang welcher der Wagen 28 mit hin- und hergehender Bewegung angetrieben werden kann.

Fuer jedes Giessblech 7 ist der Wagen 28 mit steuerbaren Greifern 29 ausgeruestet, die auf gegenueberliegenden Seiten angeordnet sind. Die Greifer 29 des Wagens 28 sind verschwenkbar gelagert und durch eine gesteuerte Bewegung sind die L-foermig ausgebildeten Arme 29 aus einer Haltelage (mit durchgehenden Linien dargestellt) in eine mit Strichpunktlinien dargstellte Oeffnungslage verschwenkbar.

Jeder Arm ist gelenkig im Punkt 136 bzw. 137 mit einem geneigt angeordneten Gestaenge 138 verbunden, das mit einer Kolben-Zylindereinheit 139 wirkverbunden ist. Somit ist es moeglich, den Armen 29 eine Schliessbewegung (Halten der Giessbleche 7) bzw. eine Oeffnungsbewegung (Abgabe der Giessbleche 7) zu verleihen.

Die Arbeitsweise der Kuehlanlage 1 gemaess der vorstehenden Erfindung ist folgende:

Um den Kuehlvorgang des Erzeugnisses im Inneren der Kuehlanlage 1 einleiten zu koennen, ist es notwendig, anfangs die Fuellhoehe im Raum 3 der Kuehlanlage 1 festzulegen. Dies erfolgt durch entsprechende Lageanordnung in bestimmter Hoehe der Verschiebeeinrichtung 27, indem die Gewindespindeln 25, 26 gesteuert angetrieben werden. (Fig. 1).

In einem zweiten Vorgang ist der Raum 3 der Kuehlanlage 1, der ueber der Plattform 15 zum Absenken der Giessbleche 7 gebildet ist, mit Giessblechen 7 zu fuellen (bis zur maximalen Fuellhoehe). Dabei wird die oberste Reihe fuer die Giessbleche 7 freigelassen, um zu ermoeglichen, dass in diese letzte Reihe, die unterhalb der maximalen Fuellhoehe liegt, mittels der Verschiebeeinrichtung 27 eine Anzahl von Giessblechen 7 von der Oberseite des sich steigend bewegenden Plattenstapels auf den, eine abwaerts gerichtete Bewegung durchfuehrenden Stapel, verschoben wird.

Nach diesen vorbereitenden Handlungen erfolgt die eigentliche Zufuhr der Giessbleche 7 an die Kuehlanlage 1.

Dies erfolgt unter Zuhilfenahme der Antriebsschnecke 5, die die gefuellten Giessbleche 7 an die Kuehlanlage 1 anliefert. Das in die Giessbleche 7 eingebrachte Erzeugnis wird im Inneren der Kuehlanlage 1 einem Kuehlvorgang ausgesetzt. Wenn z.B. vier Giessbleche 7 von der Schnecke 5 zugefuehrt wurden, und sich in einer Stellung ueber der Plattform 14, wie in Figur 1 dargestellt, befinden, wird der Kolben 12 der elektromechanischen Hubvorrichtung 10 betaetigt, und somit wird die aus Giessblechen 7 bestehende Gruppe mit steigender Bewegung der Plattform 14 an die Greifer 50, 51 der Haltevorrichtung 21 angeliefert. Im Anschluss daran wird die Plattform 14 erneut abgesenkt, um eine weitere aus Giessblechen 7 bestehende Gruppe aufzunehmen, die in der Zwischenzeit von der Foerderschnecke 5 angeliefert wurden. Im Anschluss wird die Plattform 14 erneut angehoben, um eine weitere Gruppe von Giessblechen 7 an die Haltevorrichtung 21 zu liefern.

Die bisher beschriebenen Vorgaenge wiederholen sich solange bis der Stapel P, bestehend aus steigenden (f) Giessblechen 7, in Vertikalrichtung derartig angewachsen ist, dass der Raum 3 bis zur Hoehe der in ihrer Lage eingestellten Verschiebeeinrichtung 27 angewachsen ist.

Nun beginnt der Wagen der Verschiebeeinrichtung 27 mit seiner Taetigkeit, d.h. es wird die oberste Reihe der Giessbleche 7 mit den steuerbaren Greifern 29 erfasst.

Im Anschluss daran wird der Riemen 134 fuer die Verschiebung der Giessbleche gesteuert angetrieben und die durch die Greifer 29 erfassten Giessbleche werden in einer horizontalen Ebene bewegt bis sich die Giessbleche 7 ueber der mit sinkender Bewegung (g) angetriebenen Saeule P befinden. Anschliessend werden die Giessbleche 7 auf der obersten Reihe der absinkenden Saeule P der Giessbleche abgelegt.

Die steuerbaren Greifer 70, 71 der Abgabevorrichtung 22, die ueber der Plattform 15 angeordnet sind, geben die Giessbleche 7 der untersten Reihe der nach unten bewegten (g) Saeule P ab und die Plattform 15 nimmt diese Giessbleche 7 auf.

Mit einem Betaetigen der elektomechanischen Hubvorrichtung 11 wird die Plattform mit abwaerts gerichteter Bewegung (g) angetrieben, und es erfolgt eine Abgabe der Giessbleche 7 an die Schnecke 5, die anschliessend das Entladen der Giessbleche 7 aus dem Raum 3 der Kuehlanlage besorgt.

## Patentansprüche

1. Kontinuierlich arbeitende Kuehlanlage (1) zum Behandeln von in Giessblechen (7) eingetafelten Massen, z.B. Schokoladenmasse oder aehnliche Erzeugnisse, mit einer Hub- und Stapelvorrichtung (10, 12) fuer die zugefuehrten Giessbleche (7) und einer Absenk- und Entstapelvorrichtung (11, 13) fuer die abzufoerdernden Giessbleche (7)
**dadurch gekennzeichnet,**
dass die Kuehlanlage (1) eine Einlaufoeffnung (6) aufweist, der eine Auslaufoeffnung (8) gegenueberliegt,
dass der Raum (3) der Kuehlanlage (1) von einer horizontal angeordneten Antriebswelle (4) mit einer Foerderschnecke (5) zum Transport der Giessbleche (7) durchdrungen wird,
dass der Hub- und Stapelvorrichtung (10, 12) sowie der Absenk- und Entstapelvorrichtung (11, 13) Halteinrichtungen (21) fuer die Giessbleche (7) zugeordnet sind,
dass ueber den gebildeten Giessblechstapeln (P) im Innenraum der Kuehlanlage (1) eine in ihrer Hoehenlage einstellbare Vorrichtung (27) zum Verschieben der Giessbleche (7) von der Oberseite des steigenden (f) Stapels (P) zur Oberseite des absinkenden (g) Stapels (P) angeordnet ist.

2. Kuehlanlage, nach Patentanspruch 1, **dadurch gekennzeichnet**, dass das zum Zufuehren sowie zum Ausfahren der Giessbleche (7) der Kuehlanlage (1) von einer Transportschnecke (5) durchlaufen wird, mit deren Gaengen von der Unterseite eines Giessbleches (7) abstehende Vorspruenge (40) in Wirkverbindung treten.

3. Kuehlanlage, nach Patentanspruch 1, **dadurch gekennzeichnet**, dass die Hubmittel (10, 12) und die Absenkmittel (11, 13) aus elektromechanischen Hubeinrichtungen (10, 11) bestehen, die einen Betaetigungskolben (12, 13) aufnehmen und dass jeder Betaetigungskolben mit einer Plattform (14, 15) wirkverbunden ist und die Plattform (14, 15) im Querschnitt U-foermig ausgebildet ist und dass zwischen den nach oben gerichteten Armen (14a, 14b, 15a, 15b) der U-foermig ausgebildeten Plattform (14, 15) die Foerderschnecke (5) zum Bewegen der Giessbleche (7) angeordnet ist.

4. Kuehlanlage, nach Patentanspruch 3, **dadurch gekennzeichnet**, dass jede Plattform (14, 15) verschiebbar mit vertikal angeordneten Fuehrungssaeulen (16, 17) in Wirkverbindung steht.

5. Kuehlanlage, nach Patentanspruch 1, **dadurch gekennzeichnet**, dass in der Naehe der senkrecht angeordneten Wandteile der Kuehlanlage (1) vertikale Fuehrungsstangen (23, 24) vorgesehen sind, die einen Abstand (pa) zwischen den Giessblechen (7) waehrend der Hubbewegung (f) oder der Senkbewegung (g) der Giessbleche aufrechterhalten.

6. Kuehlanlage, nach Patentanspruch 1, **dadurch gekennzeichnet**, dass im Inneren der Kuehlanlage (1) Gewindespindeln (25, 26) vorgesehen sind, die in ihrer Hoehenlage im Inneren (3) der Kuehlanlage (1) einstellbare, in einer Horizontalebene verfahrbare Verschiebeeinrichtung (27) aufnehmen und dass die Verschiebeeinrichtung (27) einen verfahrbaren Wagen (28) aufnimmt, der mit steuerbaren Greifern (29) ausgeruestet ist, die ein Erfassen bzw. Abgeben der Giessformen (7) ermoeglichen, dass die Verschiebeeinrichtung (27) von parallelen Fuehrungen (130) aufgenommen ist und mit einem Zahnriemen (134) wirkverbunden ist, der von Umlenkraedern (132, 133) aufgenommen wird, von denen ein Umlenkrad mit einer steuerbaren Antriebsvorrichtung wirkverbunden ist.

7. Kuehlanlage, nach Patentanspruch 1, **dadurch gekennzeichnet**, dass die Haltevorrichtungen, die Abgabevorrichtungen oder die Verschiebeeinrichtung (21, 22, 27) fuer die Giessbleche (7) Arme (50, 51, 70, 71, 29) aufweisen, die L-Form haben und verschwenkbar gelagert sind, und diese Arme mit einer steuerbaren Antriebsvorrichtung (49, 55, 66, 75, 139) zum Oeffnen bzw. zum Schliessen der schwenkbaren Arme wirkverbunden sind.

8. Kuehlanlage, nach Patentanspruch 1, **dadurch gekennzeichnet**, dass die Giessbleche (7) Ausnehmungen (58, 59) zum Eingreifen der L-foermig ausgebildeten Arme sowie fuer den Durchtritt eines Kuehlluftstromes aufweisen.

## Claims

1. Continuously operating cooling installation (1) for treating masses formed into bars on casting plates (7), for example chocolate mass or similar products, having a lifting and stacking mechanism (10, 12) for the fed-in casting plates (7) and a lowering and destacking mechanism (11, 13) for the casting plates (7) to be conveyed away, characterized in that the cooling installation (1) has a run-in opening (6), opposite which there is a run-out opening (8), in that the space (3) of the cooling installation (1) is penetrated by a horizontally arranged drive shaft (4) with a conveying screw (5) for transporting the casting plates (7), in that the lifting and stacking mechanism (10, 12) and the lowering and de-stacking mechanism (11, 13) are assigned holding devices (21) for the casting plates (7) and in that arranged above the stacks of casting plates (P) formed, in the interior space of the cooling installation (1), there is a height-adjustable mechanism (27) for displacing the casting plates (7) from the upper side of the rising (f) stack (P) to the upper side of the falling (g) stack (P).

2. Cooling installation according to Patent Claim 1, characterized in that the framework provided for the feeding in and discharging of the casting plates (7) of the cooling installation (1) is passed through by a transporting screw (5), with the flights of which projections (40) protruding from the underside of a casting plate (7) come into operative connection.

3. Cooling installation according to Patent Claim 1, characterized in that the lifting means (10, 12) and the lowering means (11, 13) comprise electromechanical lifting devices (10, 11), which take up an actuating piston (12, 13), and in that each actuating piston is operatively connected to a platform (14, 15) and the platform (14, 15) is of a cross-sectionally U-shaped design and in that arranged between the upwardly directed arms (14a, 14b, 15a, 15b) of the U-shaped platform (14, 15) is the conveying screw (5) for moving the casting plates (7).

4. Cooling installation according to Patent Claim 3, characterized in that each platform (14, 15) is displaceably in operative connection with vertically arranged guide bars (16, 17).

5. Cooling installation according to Patent Claim 1, characterized in that in the vicinity of the vertically arranged wall parts of the cooling installation (1) there are provided vertical guide rods (23, 24), which maintain a distance (pa) between the casting plates (7) during the lifting movement (f) or the lowering movement (12) of the casting plates.

6. Cooling installation according to Patent Claim 1, characterized in that in the interior of the cooling installation (1) there are provided threaded spindles (25, 26), which take up a displacing device (27) which is adjustable in its height in the interior (3) of the cooling installation (1) and can be moved in a horizontal plane, and in that the displacing device (27) takes up a movable carriage (28), which is equipped with controllable grippers (29) which make it possible for the casting forms (7) to be seized or released, in that the displacing device (27) is taken up by parallel guides (130) and is operatively connected to a toothed belt (134), which is taken up by deflecting wheels (132, 133), of which one deflecting wheel is operatively connected to a controllable drive mechanism.

7. Cooling installation according to Patent Claim 1, characterized in that the holding mechanisms, the delivery mechanisms or the displacing device (21, 22, 27) for the casting plates (7) have arms (50, 51, 70, 71, 29) which have an L shape and are pivotably mounted, and these arms are operatively connected to a controllable drive mechanism (49, 55, 66, 75, 139) for opening or closing the pivotable arms.

8. Cooling installation according to Patent Claim 1, characterized in that the casting plates (7) have clearances (58, 59) for the engaging of the L-shaped arms and for the passing through of a cooling air flow.

## Revendications

1. Installation de refroidissement en continu (1) pour traiter des masses réparties en tablettes dans des tôles de moulage (7), par exemple, des masses de chocolat ou des produits similaires, avec un dispositif de levage et d'empilage (10, 12) pour les tôles de moulage amenées (7) et un dispositif d'abaissement et de déchargement des piles (11, 13) pour les tôles de moulage (7) à évacuer, caractérisée en ce que l'installation de refroidissement (1) présente une ouverture d'entrée (6) a laquelle est opposée une ouverture de sortie (8), en ce que l'espace (3) de l'installation de refroidissement (1) est traversé par un arbre menant (4) disposé horizontalement avec une vis de convoyage (5) pour le transport des tôles de moulage (7), en ce que sont associées au dispositif de levage et d'empilage (10, 12) ainsi qu'au dispositif d'abaissement et de déchargement des piles (11, 13) des installations de retenue (21) pour les tôles de moulage (7), et qu'il est disposé au-dessus des piles de tôles de moulage formées (P) à l'espace intérieur de l'installation de refroidissement (1) un dispositif (27) réglable en hauteur pour déplacer les tôles de moulage (7) depuis le côté supérieur de la pile (P) montante (f) vers le côté supérieur de la pile (P) descendante (g).

2. Installation de refroidissement selon la revendication 1, caractérisée en ce que l'élément pour l'amenée ainsi que pour la sortie des tôles de moulage (7) de l'installation de refroidissement (1) est traversé par une vis de transport (5), avec les filets de laquelle viennent en prise des saillies (40) dépassant du côté inférieur d'une tôle de moulage (7).

3. Installation de refroidissement selon la revendication 1, caractérisée en ce que les moyens de levage (10, 12) et les moyens d'abaissement (11, 13) sont constitués d'installations de levage électromécaniques (10, 11) qui reçoivent un piston d'actionnement (12, 13) et en ce que chaque piston d'actionnement est en liaison active avec une plate-forme (14, 15), et que la plate-forme (14, 15) est réalisée en forme de U en section transversale et qu'il est disposé entre les bras orientés vers le haut (14a, 14b, 15a, 15b) de la plate-forme réalisée en forme de U (14, 15) la vis de convoyage (5) pour déplacer les tôles de moulage (7).

4. Installation de refroidissement selon la revendication 3, caractérisée en ce que chaque plate-forme (14, 15) est en liaison active d'une manière déplaçable avec des colonnes de guidage (16, 17) disposées verticalement.

5. Installation de refroidissement selon la revendication 1, caractérisée en ce que sont prévues au voisinage des parties de paroi disposées verticalement de l'installation de refroidissement (1) des tiges de guidage verticales (23, 24) qui maintiennent un écart (pa) entre les tôles de moulage (7) pendant le mouvement de levage (f) ou le mouvement d'abaissement (g) des tôles de moulage.

6. Installation de refroidissement selon la revendication 1, caractérisée en ce que sont prévues dans l'intérieur de l'installation de refroidissement (1) des tiges filetées (25, 26) qui reçoivent une installation de déplacement (27) réglable en hauteur à l'intérieur (3) de l'installation de refroidissement (1) et déplaçable dans un plan horizontal, et que l'installation de déplacement (27) reçoit un chariot mobile (28) qui est équipé de griffes (29) aptes à être commandées qui permettent une préhension respectivement un relâchement des moules de coulée (7), que l'installation de déplacement (27) est reçue par des guidages parallèles (130) et est en liaison active avec une courroie dentée (134) qui est reçue par des roues de renvoi (132, 133) dont une roue de renvoi est en liaison active avec un dispositif d'entraînement apte à être commandé.

7. Installation de refroidissement selon la revendication 1, caractérisée en ce que les dispositifs de retenue, les dispositifs d'émission ou l'installation de déplacement (21, 22, 27) pour les tôles de moulage (7) présentent des bras (50, 51, 70, 71, 29) qui ont une forme en L et qui sont logés d'une manière pivotante, et que ces bras sont en liaison active avec un dispositif d'entraînement apte à être commandé (49, 55, 66, 75, 139) pour ouvrir respectivement fermer les bras pivotants.

8. Installation de refroidissement selon la revendication 1, caractérisée en ce que les tôles de moulage (7) présentent des évidements (58, 59) pour l'engagement don bras réalisés en forme de L et pour le passage d'un courant d'air de refroidissement.
